# DEMANDE DE BREVET EUROPEEN

(11) **EP 4 588 705 A1**
(43) Date de publication de la demande: **23.07.2025**
(21) Numéro de dépôt: 25152326.2
(22) Date de dépôt: 16.01.2025
(51) Int. Cl.: B60K 11/04

(54) **ENSEMBLE COMPRENANT UNE PIÈCE DE VÉHICULE ET UN SUPPORT DE LA PIÈCE DE VÉHICULE SUR UN CHÂSSIS DE VÉHICULE**

(30) Priorité: 18.01.2024 FR 2400489
(71) Demandeur: Delmon Group, 75001 Paris (FR)
(72) Inventeur: ESTYOULLE, Didier, 19100 Brive La Gaillarde (FR); GOUYGOU, François, 47270 Saint Martin de Beauville (FR); SKIERA, Jean- François, 58340 CERCY-LA-TOUR (FR)
(74) Mandataire: Ipside

(57) **Abrégé**

L'invention concerne un ensemble comprenant une pièce de véhicule (10) et un support (100) de la pièce sur un châssis (20), la pièce comprenant un pion (13) et le support comprenant un corps (110) pouvant être emmanché sur ledit pion et être fixé au châssis, et un élément de verrouillage (120) dudit corps sur ledit pion, pouvant prendre une position de verrouillage, et de déverrouillage ; l'ensemble pouvant prendre :
- une première configuration, dans laquelle l'élément de verrouillage est dans sa position de verrouillage et le corps est emmanché et retenu sur le pion ;
- une deuxième configuration, dans laquelle l'élément de verrouillage est dans sa position de déverrouillage, et le pion peut être retiré du corps ;
grâce à quoi dans la première configuration le support peut être prémonté sur la pièce, et dans la deuxième configuration la pièce peut être démontée du châssis indépendamment du support.

## Description

### DOMAINE TECHNIQUE DE L'INVENTION

Le domaine de l'invention est celui du support, et en particulier de la suspension, d'organes de véhicules, de pièces ou de sous-ensembles de pièces de véhicules sur un châssis de véhicule.

Plus précisément, l'invention concerne un ensemble comprenant une pièce de véhicule et un support de la pièce de véhicule sur un châssis de véhicule.

L'invention trouve notamment des applications dans le domaine des véhicules pour la fixation et la suspension de pièces de véhicules sur un châssis. L'invention trouve une application particulière dans le domaine des véhicules terrestres et plus spécifiquement des véhicules automobiles, notamment pour le support de pièces susceptibles de pouvoir être remplacées au cours de la vie d'un véhicule automobile, et en particulier telles que des cadres d'échangeurs thermiques, pouvant comporter notamment le radiateur de refroidissement moteur, le condenseur de climatisation, le refroidisseur d'huile, le refroidisseur d'air, etc. L'invention peut également trouver des applications dans le domaine des camions, des autocars, des autobus, des véhicules de type deux-roues, des engins agricoles, des engins de chantier, ou encore des véhicules robotisés notamment de type autonome.

### ÉTAT DE LA TECHNIQUE

Il est connu de l'art antérieur des techniques de suspension d'organes de véhicules, de pièces ou de sous-ensembles de pièces de véhicules, ci-après désignés par le terme générique « pièce de véhicule », sur des châssis de véhicule.

En particulier, dans le domaine des véhicules automobiles et dans les domaines voisins, on connaît des éléments de supports communément appelés « plots » de support, servant généralement à fixer une pièce de véhicule tel qu'un cadre d'échangeur thermique en un point inférieur d'un châssis.

Lors de la fixation de la pièce de véhicule au châssis du véhicule, de tels « plots » sont généralement d'abord fixés au châssis, avant que la pièce soit placée sur le plot puis fixée à ce dernier.

Un « plot » conçu de cette manière implique des contraintes importantes en termes de logistique, l'assemblage final de la pièce et du « plot » sur le châssis ne pouvant se faire que simultanément, par l'assembleur final du véhicule.

Ainsi, la pièce et son support doivent être traitées, en termes de logistique, comme des pièces détachées jusqu'au montage final du véhicule.

Ceci est particulièrement contraignant et coûteux, et peu commode en raison de la gestion d'un nombre élevé de pièces détachées sur une ligne de montage et de la pénibilité qui en découle pour un opérateur sur la ligne de montage.

De plus, une fois le véhicule produit, il peut être nécessaire de démonter la pièce du châssis lors de l'entretien du véhicule.

Les techniques connues, notamment les éléments de support de type « plot », impliquent notamment de disposer d'un outillage adapté pour pouvoir démonter entièrement la pièce du support, puis pour démonter le support du châssis.

Ainsi, aucune des techniques actuelles ne permet de répondre simultanément à tous les besoins requis, à savoir de proposer une technique de support d'une pièce de véhicule sur un châssis de véhicule, qui permette un montage et démontage plus rapide, plus simple et plus aisé de la pièce sur le châssis.

### EXPOSÉ DE L'INVENTION

La présente invention vise à remédier à tout ou partie des inconvénients de l'état de la technique cités ci-dessus.

À cet effet, l'invention vise un ensemble comprenant une pièce de véhicule et un support configuré pour suspendre ladite pièce sur un châssis de véhicule, ladite pièce comprenant un pion d'emmanchement du support, et le support comprenant un corps principal configuré pour pouvoir être emmanché sur ledit pion, ainsi que pour pouvoir être fixé audit châssis, le support comprenant en outre un élément de verrouillage dudit corps principal sur ledit pion et qui peut prendre une position de verrouillage et une position de déverrouillage ; l'ensemble pouvant prendre :
- au moins une première configuration, dans laquelle l'élément de verrouillage est dans sa position de verrouillage et le corps principal est emmanché et retenu sur le pion de ladite pièce; et
- au moins une deuxième configuration, dans laquelle l'élément de verrouillage est dans sa position de déverrouillage, et le pion de ladite pièce peut être retiré du corps principal ;
grâce à quoi dans la première configuration le support peut être prémonté sur ladite pièce avant montage de l'ensemble sur le châssis, et grâce à quoi dans la deuxième configuration ladite pièce peut être démontée dudit châssis indépendamment du support.

Ainsi, il est possible de prémonter un ou plusieurs supports sur une pièce de véhicule préalablement à un montage de l'ensemble sur un châssis de véhicule, en fournissant l'ensemble dans sa première configuration.

Ceci permet d'améliorer la gestion logistique des pièces détachées d'un véhicule, l'ensemble pouvant être traité comme un seul élément par le fournisseur et le fabricant final du véhicule. En outre, le nombre de pièces devant être assemblés en bord de ligne de montage du véhicule se trouve ainsi réduit.

De plus, ceci permet d'accélérer et de rendre plus commode le montage de l'ensemble sur un châssis, car il est possible de fixer directement le support sur le châssis sans étape intermédiaire de montage du support.

Dans la deuxième configuration de l'ensemble, il est possible de remplacer aisément la pièce de véhicule sans nécessiter d'étapes de démontage et remontage importantes.

En effet, la pièce de véhicule peut être démontée du châssis par simple manipulation de l'élément de verrouillage vers sa position de déverrouillage, sans outil.

Le corps principal du support peut quant à lui demeurer sur le châssis, dans le but de supporter une nouvelle pièce de remplacement, qui peut être fixée au châssis par manipulation de l'élément de verrouillage vers sa position de verrouillage, sans outil toujours. L'ensemble se retrouve alors à nouveau dans sa première configuration.

En résumé, grâce à ces dispositions, les opérations de montage, démontage et remontage d'une pièce de véhicule sur un châssis de véhicule sont grandement facilitées, rendues plus commodes et plus rapides.

D'autres caractéristiques particulièrement simples et commodes de l'ensemble selon l'invention sont décrites ci-après.

Préférentiellement, l'élément de verrouillage est configuré pour pouvoir passer de l'une à l'autre de ses positions de verrouillage et de déverrouillage par rotation relative autour du pion.

Préférentiellement, l'élément de verrouillage est configuré pour pouvoir passer de la position de verrouillage à la position de déverrouillage, et inversement, par rotation relative d'un quart de tour autour du pion.

Il peut également s'agir d'une rotation d'un angle différent d'un quart de tour, par exemple d'un demi-tour, d'un tiers de tour, d'un cinquième de tour, d'un sixième de tour, d'un huitième de tour, etc.

Préférentiellement, le pion comporte une tige et une tête d'extrémité, et l'élément de verrouillage est configuré pour pouvoir être emmanché sur le pion de sorte que la tige traverse le corps principal et l'élément de verrouillage, l'élément de verrouillage étant configuré pour pouvoir être retiré du pion lorsqu'il est dans sa position de déverrouillage, et pour être retenu sur le pion en butée contre la tête dans sa position de verrouillage, de sorte à retenir également le corps principal sur le pion.

Préférentiellement, l'élément de verrouillage comporte une ouverture traversante, la tête du pion et l'ouverture étant de forme complémentaire, l'élément de verrouillage étant configuré de sorte à permettre le passage de la tête à travers l'ouverture lorsque l'élément de verrouillage est dans sa position de déverrouillage, et de sorte à retenir l'élément de verrouillage contre la tête lorsque l'élément de verrouillage est dans sa position de verrouillage.

Préférentiellement, la tête du pion est sensiblement une forme en T, et l'ouverture de l'élément de verrouillage est sensiblement une forme de fente, de manière à former conjointement un verrou de type baïonnette.

Le verrou peut également être de tout autre type, avec la tête du pion et l'ouverture de l'élément de verrouillage qui coopèrent.

Préférentiellement, l'ensemble comporte au moins un moyen de maintien de l'élément de verrouillage en position de verrouillage.

Ceci permet tout changement intempestif de configuration de l'ensemble.

Par exemple, dans l'ensemble, l'un parmi le corps principal et l'élément de verrouillage comporte au moins une encoche, et l'un parmi le corps principal et l'élément de verrouillage comporte au moins un ergot de butée configuré pour être retenu dans ladite encoche dans la position de verrouillage de l'élément de verrouillage.

Par exemple, l'élément de verrouillage comporte au moins une rampe configurée pour coopérer avec ledit pion pour retenir l'élément de verrouillage dans sa position de verrouillage.

Préférentiellement, le corps principal est configuré pour être fixé au châssis par encliquetage.

Le corps principal peut également être fixé au châssis par tout autre moyen que par emboîtage élastique.

De préférence, l'emboîtage élastique est ici réversible.

Préférentiellement, le corps principal comprend des organes de fixation configurés pour coopérer avec le châssis pour former un emboîtage élastique, les organes de fixation étant opposés sur le corps principal de sorte à pouvoir être manipulés par pincement, et préférentiellement par pincement entre deux doigts d'une main d'un individu, pour désolidariser le corps principal du châssis.

Ainsi, en cas de besoin, le corps principal peut être retiré du châssis de manière particulièrement simple et commode, en particulier d'une seule main.

Préférentiellement, le corps principal comprend une partie centrale en matériau sensiblement élastique et qui est configurée pour être emmanchée sur le pion, et une partie périphérique en matériau sensiblement rigide, destinée à être fixée au châssis.

Ainsi, le support réalise une fonction d'amortissement des chocs et de suspension.

Selon un deuxième aspect, l'invention a également pour objet un véhicule, préférentiellement terrestre, comprenant un ensemble tel que décrit ci-avant.

Préférentiellement, le véhicule est l'un parmi un véhicule automobile, un camion, un autocar, un autobus, un véhicule de type deux-roues, un engin agricole, un engin de chantier, ou un véhicule robotisé notamment de type autonome.

### BRÈVE DESCRIPTION DES FIGURES

D'autres avantages, buts et caractéristiques particulières de la présente invention ressortiront de la description non limitative qui suit d'au moins un mode de réalisation particulier des dispositifs objets de la présente invention, en regard des dessins annexés, dans lesquels :
La figure 1 est une vue schématique de face d'une partie basse d'une pièce de véhicule, montée sur un châssis de véhicule au moyen de deux supports.
La figure 2 est une vue partielle en perspective d'un ensemble comprenant une pièce de véhicule et un support de la pièce dans une première configuration de l'ensemble et dans un état prémonté avant montage sur un châssis de véhicule.
La figure 3 est une vue en perspective de l'ensemble représenté sur la figure 2, toujours dans une première configuration de l'ensemble mais dans un état monté sur le châssis de véhicule.
La figure 4 est une vue en perspective de l'ensemble représenté sur la figure 3, dans une deuxième configuration de l'ensemble et dans un état dans lequel la pièce de véhicule peut être démontée du châssis de véhicule.
La figure 5 est une vue en perspective partielle de l'ensemble, dans un état dans lequel la pièce de véhicule a été démontée du châssis de véhicule, et dans lequel le corps principal du support demeure sur le châssis de véhicule.
La figure 6 et la figure 7 sont des vues partielles en perspective de la pièce de véhicule respectivement selon une vue de dessus et une vue de dessous.
La figure 8 et la figure 9 sont des vues en perspective du corps principal du support, respectivement selon une vue de dessus et une vue de dessous.
La figure 10 est une vue partielle en perspective du châssis de véhicule.
La figure 11 et la figure 12 sont des vues en perspective de l'élément de verrouillage du support, respectivement selon une vue de dessus et une vue de dessous.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

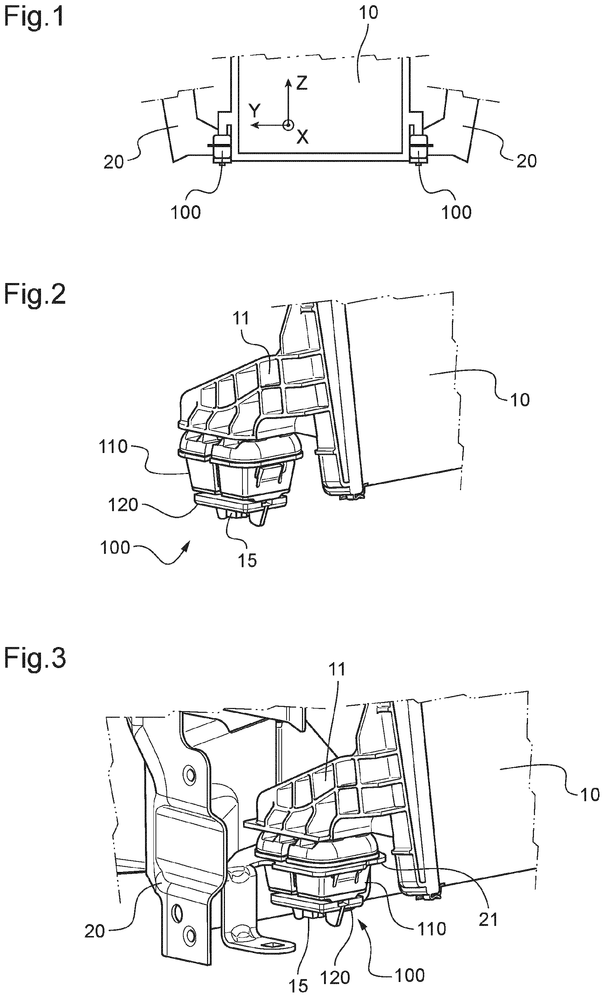

La figure 1 représente schématiquement et partiellement un châssis 20 automobile sur lequel est monté une pièce automobile 10 (montrée partiellement), qui est ici un cadre de radiateur automobile. Ici, la partie du châssis 20 illustrée est une traverse avant de véhicule automobile.

On rappelle dès à présent que l'invention ne se limite pas aux véhicules automobiles, et qu'elle peut être mise en oeuvre pour tout type de véhicule, en particulier tout type de véhicule terrestre. La pièce automobile 10 et le châssis 20 automobile peuvent ainsi être autres qu'automobiles.

La pièce automobile 10 est montée sur le châssis 20 au moyen d'une pluralité d'éléments de fixation.

La partie supérieure (selon l'axe Z utilisé conventionnellement en technique automobile en lien avec un repère XYZ tel que représenté sur la figure 1) de la pièce automobile 10 est fixée au châssis 20 au moyen d'un support supérieur (non représenté).

La partie inférieure de la pièce automobile 10 est fixée au châssis 20 au moyen de supports 100. Dans l'exemple illustré, deux supports 100 sont utilisés.

Les figures 2 à 5 représentent partiellement un ensemble comprenant la pièce automobile 10 (représentée partiellement sur les figures 2 à 5) et au moins un support 100 (un seul support 100 est représenté sur les figures 2 à 5), l'ensemble comprenant ici en particulier deux supports 100 sans que ce nombre ne soit limitatif, dans différents états de fixation et de séparation par rapport à un châssis 20.

Le support 100 comprend un corps principal 110, destiné à être fixé au châssis 20, et un élément de verrouillage 120 du corps principal 110 sur la pièce automobile 10.

La figure 2 représente l'ensemble formé par la pièce automobile 10 (montrée partiellement) et le support 100 dans un état séparé du châssis 20 qui n'est pas visible sur la figure 2.

Cet état correspond notamment à un état de l'ensemble avant un premier montage et fixation sur le châssis 20, c'est-à-dire dans un état de prémontage sur le châssis 20.

Sur la figure 2, le support 100 se trouve dans une première configuration de l'ensemble, dans laquelle le support 100 est maintenu sur la pièce automobile 10, et verrouillé sur cette dernière au moyen de l'élément de verrouillage 120 qui se trouve dans une position de verrouillage.

En particulier, la pièce automobile 10 avec le support 100 prémonté tel que montré sur la figure 2 peut être directement fixée au châssis 20 sans nécessiter de démontage du support 100 de la pièce automobile 10.

La figure 3 représente la pièce automobile 10 (montrée partiellement) fixée au châssis 20 automobile (montré partiellement) au moyen du support 100.

Cet état correspond notamment à un état de l'ensemble lorsqu'il est monté dans un véhicule prêt à l'utilisation, ou en utilisation.

Le support 100 se trouve également dans la première configuration de l'ensemble dans cet état. En effet, ici aussi le support 100 est maintenu sur la pièce automobile 10, et verrouillé sur cette dernière, à la différence que le support 100 est en outre fixé au châssis 20.

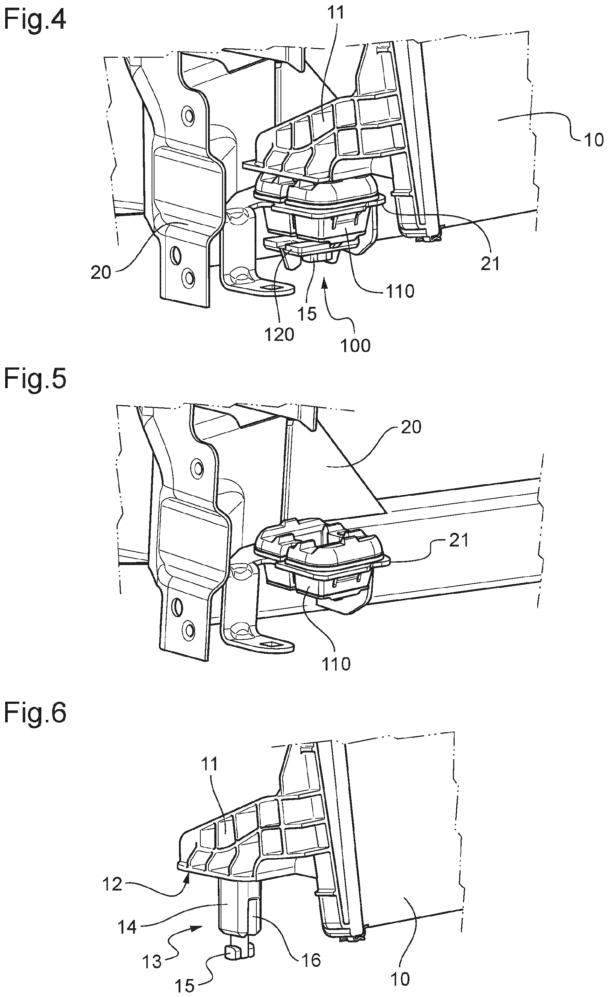

La figure 4 représente l'ensemble monté sur le châssis 20, cette fois dans un état dans lequel la pièce automobile 10 est démontable du châssis.

A cet effet, le support 100 se trouve dans une deuxième configuration de l'ensemble, dans laquelle la pièce automobile 10 n'est plus retenue ni verrouillée sur le support 100, mais reposant simplement sur ce dernier, l'élément de verrouillage 120 se trouvant dans une position de déverrouillage.

Ainsi, la pièce automobile 10, lorsqu'elle a été préalablement montée sur le châssis 20, peut être retirée du châssis 20 indépendamment du support 100 lorsque l'ensemble se trouve dans la deuxième configuration.

Cet état correspond notamment à un état dans lequel la pièce automobile 10 doit être retirée du véhicule sur lequel elle est montée, afin d'être remplacée.

La figure 5 représente le châssis 20 (montré partiellement) sur lequel est fixé le corps principal 110, la pièce automobile 10 ayant été retirée de ce dernier, et donc du châssis 20. L'élément de verrouillage (non représenté sur la figure 5) est également retiré de la pièce automobile 10 dans cet état.

Une nouvelle pièce automobile, dépourvue de support, peut alors être montée sur le corps principal 110 resté fixé au châssis 20, puis y être verrouillée au moyen de l'élément de verrouillage 120.

Il convient de préciser que l'élément de verrouillage 120 peut avoir plusieurs positions de verrouillage et/ou plusieurs positions de déverrouillage.

En référence aux figures 6 à 12, l'ensemble formé par la pièce automobile 10 et le support 100 va maintenant être décrit plus en détail.

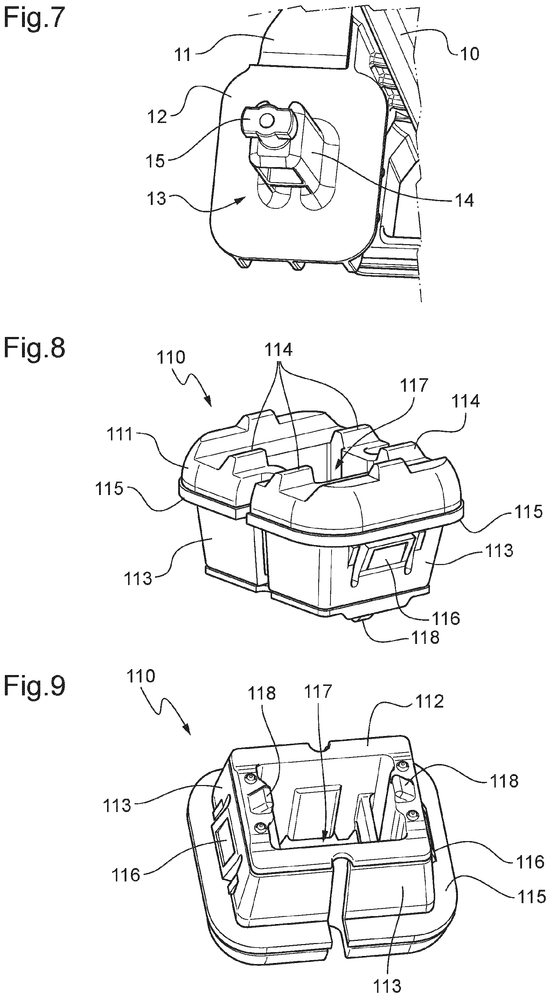

Les figures 6 et 7 montrent une partie de la pièce automobile 10, qui peut être un cadre d'échangeur thermique automobile, aussi appelé communément cadre de radiateur.

La pièce automobile 10 comporte une patte 11 de montage, saillant ici longitudinalement de la pièce automobile 10, c'est-à-dire selon l'axe X du véhicule lorsque la pièce automobile 10 est montée sur un véhicule automobile, sans qu'une telle direction d'extension ne soit limitative. Selon une alternative, la patte de montage peut ne pas être saillante de la pièce automobile 10 mais formée directement dans celle-ci.

La patte de montage 11 comporte une face d'appui 12 et un pion 13 s'étendant depuis la face d'appui 12.

Dans l'exemple illustré, lorsque la pièce automobile 10 est montée dans un véhicule automobile, le pion 13 s'étend sensiblement selon l'axe Z, vers le bas depuis la face d'appui 12.

Le pion 13 comporte une tige 14 rattachée à la face d'appui 12, et une tête 15 d'extrémité.

Ici, la tête 15 est en forme de T, toutefois sans être limitée à cette forme.

La tête 15 est configurée pour retenir l'élément de verrouillage 120 sur le pion 13, lorsque l'élément de verrouillage 120 est en position de verrouillage.

.

Les figures 8 et 9 montrent le corps principal 110 du support 100.

Dans l'exemple illustré, le corps principal 110 est sensiblement parallélépipédique rectangle sans que cette forme ne soit limitative, et comporte une face supérieure 111, une face inférieure 112 opposée à la face supérieure 111, et une pluralité de parois 113 reliant la face supérieure 111 et la face inférieure 112.

Comme cela est visible sur la figure 3, la pièce automobile 10 est destinée, via sa face d'appui 12, à reposer sur la face supérieure 111 du corps principal 110.

La face supérieure 111 est sensiblement élargie par rapport au reste du corps principal 110, formant ainsi un rebord 115 périphérique s'étendant depuis les parois 113.

Ainsi, la face inférieure 112 est de dimensions sensiblement inférieures à celles de la face supérieure 111.

De plus, préférentiellement, le corps principal 110 s'évase sensiblement depuis la face inférieure 112 vers la face supérieure 111, en étant plus large au niveau face supérieure 111.

Autrement dit, les parois 113 forment ensemble une forme d'entonnoir, ou une forme sensiblement tronconique. Une telle forme permet une introduction facilitée et un guidage du corps principal 110 dans la partie de support 21 décrite ci-après.

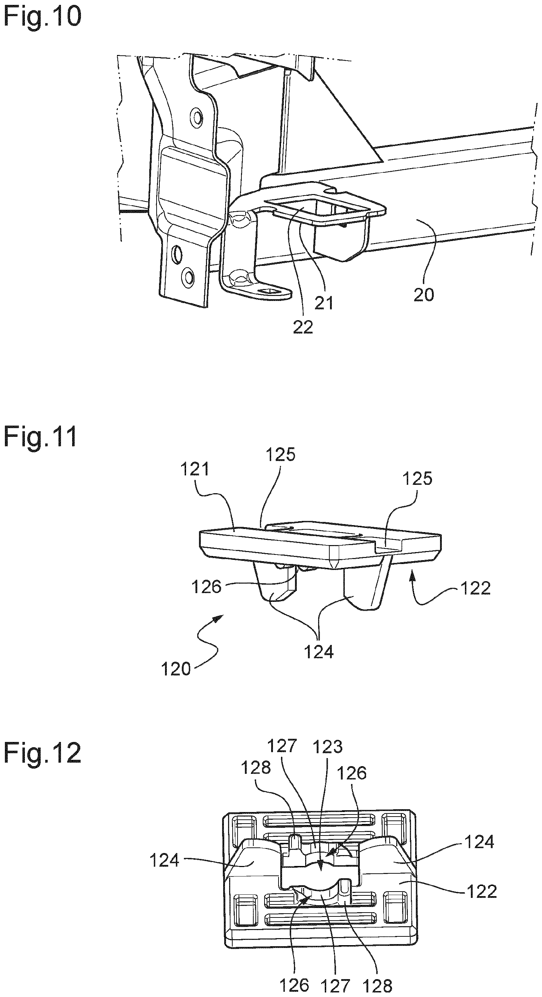

La figure 10 montre le châssis 20 qui comporte une partie de support 21 comportant une ouverture 22 de fixation du corps principal 110. Ici, la partie de support 21 a la forme d'une plaque saillant du châssis 20. La partie de support 21 peut être rapportée au châssis 20, ou être d'un seul tenant avec ce dernier.

L'ouverture 22 est de forme sensiblement rectangulaire, sans que cette forme ne soit limitative, complémentaire à la section, ici sensiblement rectangulaire, du corps principal 110 sous le rebord 115.

De cette manière, le corps principal 110 peut être introduit dans l'ouverture 22 par sa face inférieure 112, jusqu'à buter contre le rebord 115. Ainsi, le corps principal 110 peut reposer selon l'axe Z sur le châssis 20.

Afin de fixer le corps principal 110 au châssis 20, le corps principal 110 comporte un organe de fixation du support 100 au châssis 20, ici sur chacune de deux parois 113 opposées. Toutefois, toute autre nombre et/ou disposition d'organes de fixation est possible.

L'organe de fixation est ici une languette 116, ou clip, par exemple sensiblement rectangulaire, s'étendant par un de ses côtés qui est proximal de la face inférieure 112 depuis une paroi 113, son côté distal de la face inférieure 112 étant libre. La languette 116 saille légèrement vers l'extérieur du corps principal 110, depuis la paroi 113 depuis laquelle elle s'étend, et possède une capacité de déformation élastique au niveau de son côté par lequel elle se rattache à la paroi 113.

De préférence, la distance entre le côté de la languette 116 qui est distal de la face inférieure 112, et le rebord 115, correspond sensiblement à une épaisseur de la plaque formant la partie de support 21 du châssis 20.

Ainsi, la languette 116 forme un organe de fixation par emboîtage élastique, aussi appelé encliquetage, dans l'ouverture 22 de la partie de support 21, la languette 116 pouvant se déformer élastiquement lors de l'insertion par la face inférieure 112, puis reprendre sa position initiale.

Il convient de noter que cette fixation par encliquetage n'est pas nécessairement définitive, et peut être réversible par manipulation de la languette 116.

Il convient également de préciser que tout autre type de fixation peut être envisagé, et que celle-ci peut notamment être adaptée en fonction du point de fixation prévu sur le châssis 20 qui doit être équipé de l'ensemble.

En outre, le corps principal 110 comporte une ouverture, dite première ouverture 117, qui est ici traversante, configurée pour l'insertion du pion 13. La première ouverture 117 s'étend sensiblement selon l'axe Z lorsque la pièce automobile 10 est montée dans un véhicule automobile, et est ici sensiblement centrée sur le corps principal 110.

Lorsque le pion 13 est pleinement inséré dans le corps principal 110, la face d'appui 12 de la pièce automobile 10 et la face supérieure 111 du corps principal 110 sont en contact.

Le pion 13 présente une longueur sensiblement supérieure à la hauteur du corps principal 110 selon l'axe Z, c'est-à-dire à la distance séparant les extrémités des face supérieure 111 et face inférieure 112.

Ainsi, le pion 13 traverse le corps principal 110 lorsqu'il est inséré dans ce dernier, et en dépasse du côté de la face inférieure 112, tel que cela est visible sur les figures 2 et 3 notamment.

Selon une alternative, la première ouverture 117 peut ne pas être traversante et/ou le pion 13 peut ne pas traverser le corps principal 110 lorsqu'il est inséré dans ce dernier, notamment dans un cas où le pion 13 est de hauteur inférieure à la hauteur du corps principal 110.

La figure 11 et la figure 12 montrent l'élément de verrouillage 120 du support 100.

L'élément de verrouillage 120 possède la forme générale d'une plaque rectangulaire, toutefois sans être limité à cette forme, de dimensions correspondant sensiblement à celles de la face inférieure 112 du corps principal 110.

L'élément de verrouillage 120 possède une face supérieure 121 et une face inférieure 122, la face supérieure 121 étant destinée à entrer en contact avec la face inférieure 112 du corps principal 110, et la face inférieure 122 étant destinée à entrer en contact avec la tête 15 du pion 13 dans la position de verrouillage de l'élément de verrouillage 120.

Dans sa position de verrouillage, l'élément de verrouillage 120 est sensiblement aligné avec la face inférieure 112, et se trouve dans le prolongement de celle-ci, tel que représenté sur la figure 2 et sur la figure 3. Ainsi, quand l'élément de verrouillage 120 est monté avec le corps principal 110 sur le pion 13, le support 100 entier peut être inséré dans l'ouverture 22 du châssis 20, pour y être fixé.

L'élément de verrouillage 120 comporte une ouverture, dite deuxième ouverture 123, qui est ici centrale et traversante, sensiblement alignée avec la première ouverture 117 du corps principal 110 lorsque les deux éléments sont montés sur le pion 13.

La deuxième ouverture 123 sensiblement en forme de fente, de dimensions correspondant dans l'exemple illustré à celles de la branche supérieure de la forme en T de la tête 15, sans que cette forme ne soit limitative.

De cette manière, la deuxième ouverture 123 et la tête 15 forment ici conjointement un verrou de type baïonnette, verrouillable et dé-verrouillable par rotation relative de l'élément de verrouillage 120 par rapport au pion 13.

En position de verrouillage, la branche supérieure de la forme de T de la tête 15 forme butée avec la face inférieure 122 de l'élément de verrouillage 120, et l'élément de verrouillage 120 est pris entre la branche supérieure et le corps principal 110. L'élément de verrouillage 120 et le corps principal 110 sont ainsi retenus sur le pion 13, et la pièce automobile est ainsi assujettie mécaniquement au châssis 20.

Dans l'exemple illustré, la fente que forme la deuxième ouverture 123 et la branche supérieure de la forme en T de la tête 15 sont orthogonales l'une à l'autre dans la position de verrouillage de l'élément de verrouillage 120.

Ainsi, le verrou formé par la deuxième ouverture 123 et la tête 15 est ici de type baïonnette à quart de tour, la rotation relative pour le passage d'une position de verrouillage à une position de déverrouillage étant d'un quart de tour.

Toutefois, toute autre orientation de ces éléments peut être choisie, tant que l'orientation de la branche supérieure de la forme en T de la tête 15 et l'orientation de la fente de la deuxième ouverture 123 diffèrent l'un de l'autre dans la position de verrouillage de l'élément de verrouillage 120.

En résumé, dans la première configuration de l'ensemble, le corps principal 110 est en butée contre la face d'appui 12, l'élément de verrouillage 120 est en butée contre la face inférieure 112, et la tête 15 est en butée contre l'élément de verrouillage 120 qui est en position de verrouillage, c'est-à-dire avec la fente de la deuxième ouverture 123 et la branche supérieure de la forme en T de la tête 15 qui sont sensiblement orthogonales l'une à l'autre.

Dans la première configuration de l'ensemble, le support 100 peut ainsi être prémonté sur la pièce automobile 10 au moyen de l'élément de verrouillage 120, et peut être fixé sur le châssis 20 au moyen des organes de fixation formés par exemple par des languettes 116, sans nécessiter de manipuler l'élément de verrouillage 120 ni de démonter le support 100 de la pièce automobile 10.

Dans la deuxième configuration de l'ensemble, à la différence de la première configuration, l'élément de verrouillage 120 est en position de déverrouillage, c'est-à-dire que la fente de la deuxième ouverture 123 et la branche supérieure de la forme en T de la tête 15 sont sensiblement alignées, et la face inférieure 122 de l'élément de verrouillage 120 n'est plus en butée contre la tête 15. Le pion 13 peut ainsi librement être retiré du corps principal 110, et la pièce automobile 10 peut être démontée du châssis 20.

Dans la deuxième configuration de l'ensemble, le corps principal 110 n'a donc pas à être démonté du châssis 20 pour pouvoir démonter la pièce automobile 10 du châssis 20. Notamment pour cette raison, une fixation du corps principal 110 par encliquetage sur le châssis 20, qui est particulièrement pratique lors du montage de l'ensemble sur le châssis, peut être envisagée.

Il convient de préciser que le support 100 peut intégralement être réutilisé lors d'un changement de pièce automobile 10, le corps principal 110 pouvant rester en place sur le châssis, et l'élément de verrouillage 120 étant temporairement retiré avant de servir à nouveau pour verrouiller le pion 13 de la nouvelle pièce automobile 10 sur le corps principal 110.

Il convient de préciser que tout autre mode de réalisation notamment de l'élément de verrouillage 120 et du pion 13, notamment au moyen de toute autre forme et/ou matériau de ces éléments, peut être envisagé pour réaliser la fonction de verrouillage et déverrouillage du corps principal 110 sur le pion 13.

Lorsqu'une telle fonction est réalisée par une rotation relative de l'élément de verrouillage 120 et du pion 13, toute autre conception structurelle que celle décrite, permettant de réaliser la fonction de verrouillage et déverrouillage du corps principal 110 sur le pion 13 par rotation relative, peut être envisagée.

A présent, d'autres caractéristiques particulièrement avantageuses de l'ensemble vont également être décrites ci-après.

- L'ensemble peut comporter au moins un moyen de maintien de l'élément de verrouillage 120 en position de verrouillage.

Par exemple, la face inférieure 112 du corps principal 110 peut comprendre une ou plusieurs ergots de butée 118 saillant de la face inférieure 112. Par exemple, la face inférieure 112 peut comprendre deux ergots de butée 118 disposées au niveau de côtés opposés de la face inférieure 112, par exemple au bord de la première ouverture 117 du corps principal 110.

L'élément de verrouillage 120 peut comporter une ou plusieurs encoches 125 de forme complémentaire aux ergots de butée 118, pratiquées dans la face supérieure 121.

Ainsi, dans la position de verrouillage de l'élément de verrouillage 120, la ou les ergots de butée 118 sont logées dans la ou les encoches 125 et limitent le risque de rotation inopinée de l'élément de verrouillage 120.

Lors du passage dans la position de déverrouillage de l'élément de verrouillage 120, et inversement, un léger jeu axial sur le pion 13 et/ou une légère déformation élastique des ergots de butée 118 peuvent être exercés pour déloger les ergots de butée 118 des encoches 125, et passer l'élément de verrouillage 120 en position de déverrouillage.

Il convient de préciser que l'agencement des ergots de butée 118 et des encoches 125 peut être inversé, c'est-à-dire que l'élément de verrouillage 120 peut comprendre des ergots et le corps principal 110 peut comprendre des encoches.

En outre, en alternative ou de façon complémentaire, l'élément de verrouillage 120 peut également comporter au moins une rampe 126 configurée pour coopérer avec le pion 13, pour retenir l'élément de verrouillage 120 dans sa position de verrouillage.

Par exemple, chaque rampe 126 peut être formée par une piste centrale 127 formée sur la face inférieure 122, et qui est sensiblement concave en direction de la face inférieure 122, définissant un sillon dans lequel une branche de la forme de T de la tête 15 peut se loger.

La rampe 126 peut comporter, à l'une de ses extrémités, une protubérance 128 saillant de la face inférieure 122, et formant une butée pour la tête 15 limitant sa rotation relative par rapport à l'élément de verrouillage.

Par exemple, la rampe 126 est située sur la face inférieure 122 de sorte à ce qu'une partie de la branche supérieure de la forme en T de la tête 15 se loge dans la rampe 126 lorsque l'élément de verrouillage 120 est dans sa position de verrouillage, à l'issue du mouvement de verrouillage.

Dans l'exemple illustré, l'élément de verrouillage 120 comprend deux rampes 126 situées au niveau de côtés opposés de l'élément de verrouillage 120, chaque rampe 126 étant destinée à recevoir une partie opposée de la branche supérieure de la forme en T de la tête 15.

Ici également, le passage d'une position de verrouillage à une position de déverrouillage, et inversement, est rendu possible par une légère déformation élastique du corps principal 110 et/ou de la rampe 126.

Il convient de préciser qu'un sens de déverrouillage préférentiel peut être défini grâce au moyen de maintien de l'élément de verrouillage 120 en position de verrouillage.

D'autres variantes de réalisation, librement combinables entre elles et avec l'exemple décrit ci-dessus, sont décrites ci-après.
- Le pion 13 peut comporter une tête 15 différente d'une branche supérieure d'un T, et peut par exemple comporter une tête 15 ayant la forme d'une plaque polygonale formée à l'extrémité de la tige 14, en étant sensiblement orthogonale à celle-ci. La deuxième ouverture 123 de l'élément de verrouillage 120 est alors de forme sensiblement complémentaire à la forme de la plaque polygonale, de sorte à former un verrou par complémentarité de forme de la tête 15 et de la deuxième ouverture 123.
- Par exemple, la forme de plaque polygonale de la tête 15 et la forme de la deuxième ouverture 123 peut être : triangulaire, carrée, pentagonale, hexagonale, etc. La forme peut également être une forme polygonale non régulière.
- Lorsque l'ensemble comprend deux supports 100, la pièce automobile 10 peut comporter deux pions 13 chacun d'une forme sensiblement différente, permettant de compenser une éventuelle dilatation de la pièce automobile 10 et/ou une dispersion de tolérances de fabrication.
- L'élément de verrouillage 120 peut présenter une ou plusieurs, par exemple deux, ailettes 124 de préhension, afin de faciliter son passage d'une position de verrouillage à une position de verrouillage, et inversement.

Par exemple, les ailettes 124 peuvent saillir de la forme générale de plaque de l'élément de verrouillage 120, depuis la face inférieure 122.

Par exemple, les ailettes 124 peuvent présenter chacune une arête extérieure inclinée par rapport à la face inférieure 122, en direction du centre de l'élément de verrouillage 120, par exemple sensiblement selon le même angle que celui définissant la forme évasée du corps principal 110, les ailettes 124 s'étendant ainsi dans le prolongement de ce dernier. Ceci permet également de faciliter l'insertion du support 100 dans l'ouverture 22 de la partie de support 21.
- Le corps principal 110 du support 100 peut être monobloc. Par exemple, il peut être en matériau sensiblement élastique, adapté pour amortir des vibrations exercées sur la pièce automobile 10.
- De façon alternative, le corps principal 110 peut être réalisé à partir de plusieurs pièces rapportées.

Par exemple, le corps principal 110 peut comprendre une partie centrale configurée pour être emmanchée sur le pion, comportant notamment la face supérieure 111, la face inférieure 112 ainsi que la première ouverture 117, et une partie périphérique, destinée à être fixée au châssis automobile, comportant notamment les parois 113 et les organes de fixation, formés par exemple par des languettes 116. Les deux parties peuvent être assemblées l'une à l'autre par exemple par emmanchement en force, ou encliquetage ou emboîtage élastique, ou surmoulage ou autre méthode.

En outre, la partie centrale peut être en matériau sensiblement élastique, par exemple en caoutchouc, adapté pour amortir des vibrations exercées sur la pièce automobile 10, et la partie périphérique peut être en matériau sensiblement rigide, par exemple en polyamide. Ainsi, le support 100 peut former un support de suspension de la pièce automobile 10 sur le châssis 20.
- Selon une variante, l'élément de verrouillage 120 est configuré pour pouvoir passer de la position de verrouillage à la position de déverrouillage, et inversement, par translation.
- Par exemple, la deuxième ouverture 123 de l'élément de verrouillage 120 possède une première partie plus élargie, à travers laquelle la tête 15 peut passer, et une partie plus étroite, à travers laquelle la tête 15 ne peut pas passer. Dans la position de verrouillage, l'élément de verrouillage 120 est positionné avec la partie plus étroite de la deuxième ouverture 123 en vis-à-vis de la tête 15, qui bute alors contre l'élément de verrouillage 120, et dans la position de déverrouillage, l'élément de verrouillage est déplacé par translation avec la partie plus élargie de la deuxième ouverture 123 qui est en vis-à-vis de la tête 15, qui peut alors passer à travers la deuxième ouverture 123.

On rappelle que la présente invention ne se limite pas aux exemples décrits et illustrés.

## Revendications

1. Ensemble (10, 100) comprenant une pièce (10) de véhicule et un support (100) configuré pour suspendre ladite pièce (10) sur un châssis (20) de véhicule,
ladite pièce (10) comprenant un pion (13) d'emmanchement du support, et le support (100) comprenant un corps principal (110) configuré pour pouvoir être emmanché sur ledit pion (13), ainsi que pour pouvoir être fixé audit châssis (20), **caractérisé en ce que** le support (100) comprend en outre un élément de verrouillage (120) dudit corps principal (110) sur ledit pion (13) et qui peut prendre une position de verrouillage et une position de déverrouillage ; l'ensemble (10, 100) pouvant prendre :
- au moins une première configuration, dans laquelle l'élément de verrouillage (120) est dans sa position de verrouillage et le corps principal (110) est emmanché et retenu sur le pion (13) de ladite pièce (10) ; et
- au moins une deuxième configuration, dans laquelle l'élément de verrouillage (120) est dans sa position de déverrouillage, et le pion (13) de ladite pièce (10) peut être retiré du corps principal (110) ;
grâce à quoi dans la première configuration le support (100) peut être prémonté sur ladite pièce (10) avant montage de l'ensemble sur le châssis (20), et grâce à quoi dans la deuxième configuration ladite pièce (10) peut être démontée dudit châssis (20) indépendamment du support (100).

2. Ensemble (10, 100) selon la revendication 1, dans lequel l'élément de verrouillage (120) est configuré pour pouvoir passer de l'une à l'autre de ses positions de verrouillage et de déverrouillage par rotation relative autour du pion (13).

3. Ensemble (10, 100) selon la revendication 2, dans lequel l'élément de verrouillage (120) est configuré pour pouvoir passer de la position de verrouillage à la position de déverrouillage, et inversement, par rotation relative d'un quart de tour autour du pion (13).

4. Ensemble (10, 100) selon l'une quelconque des revendications 1 à 3, dans lequel le pion (13) comporte une tige (14) et une tête (15) d'extrémité, et dans lequel l'élément de verrouillage (120) est configuré pour pouvoir être emmanché sur le pion (13) de sorte que la tige (14) traverse le corps principal (110) et l'élément de verrouillage (120), l'élément de verrouillage (120) étant configuré pour pouvoir être retiré du pion (13) lorsqu'il est dans sa position de déverrouillage, et pour être retenu sur le pion (13) en butée contre la tête (15) dans sa position de verrouillage, de sorte à retenir également le corps principal (110) sur le pion (13).

5. Ensemble (10, 100) selon la revendication 4, dans lequel l'élément de verrouillage (120) comporte une ouverture (123) traversante, la tête (15) du pion (13) et l'ouverture (123) étant de forme complémentaire, l'élément de verrouillage (120) étant configuré de sorte à permettre le passage de la tête (15) à travers l'ouverture (123) lorsque l'élément de verrouillage (120) est dans sa position de déverrouillage, et de sorte à retenir l'élément de verrouillage (120) contre la tête (15) lorsque l'élément de verrouillage (120) est dans sa position de verrouillage.

6. Ensemble (10, 100) selon l'une quelconque des revendications 4 et 5, dans lequel la tête (15) du pion (13) est sensiblement une forme en T, et l'ouverture de l'élément de verrouillage (120) est sensiblement une forme de fente, de manière à former conjointement un verrou de type baïonnette.

7. Ensemble (10, 100) selon l'une quelconque des revendications 1 à 6, comportant au moins un moyen de maintien (118, 125 ; 126) de l'élément de verrouillage (120) en position de verrouillage.

8. Ensemble (10, 100) selon la revendication 7, dans lequel l'un parmi le corps principal (110) et l'élément de verrouillage (120) comporte au moins une encoche (125), et l'un parmi le corps principal (110) et l'élément de verrouillage (120) comporte au moins un ergot de butée (118) configuré pour être retenu dans ladite encoche (125) dans la position de verrouillage de l'élément de verrouillage (120).

9. Ensemble (10, 100) selon l'une quelconque des revendications 7 et 8, dans lequel l'élément de verrouillage (120) comporte au moins une rampe (126) configurée pour coopérer avec ledit pion (13) pour retenir l'élément de verrouillage (120) dans sa position de verrouillage.

10. Ensemble (10, 100) selon l'une quelconque des revendications 1 à 9, dans lequel le corps principal (110) est configuré pour être fixé au châssis (20) par emboîtage élastique.

11. Ensemble (10, 100) selon la revendication 10, dans lequel l'emboîtage élastique est réversible.

12. Ensemble (10, 100) selon la revendication 11, dans lequel le corps principal (110) comprend des organes de fixation (116) configurés pour coopérer avec le châssis (20) pour former un emboîtage élastique, les organes de fixation (116) étant opposés sur le corps principal (110) de sorte à pouvoir être manipulés par pincement, et préférentiellement par pincement entre deux doigts d'une main d'un individu, pour désolidariser le corps principal (110) du châssis (20).

13. Ensemble (10, 100) selon l'une quelconque des revendications 1 à 12, dans lequel le corps principal (110) comprend une partie centrale en matériau sensiblement élastique et qui est configurée pour être emmanchée sur le pion (13), et une partie périphérique en matériau sensiblement rigide, destinée à être fixée au châssis (20).

14. Véhicule, préférentiellement terrestre, comprenant un ensemble (10, 100) selon l'une quelconque des revendications 1 à 13.

15. Véhicule selon la revendication 14, le véhicule étant l'un parmi un véhicule automobile, un camion, un autocar, un autobus, un véhicule de type deux-roues, un engin agricole, un engin de chantier, ou un véhicule robotisé notamment de type autonome.
